# EUROPEAN PATENT APPLICATION

(11) **EP 2 799 216 A1**
(43) Date of publication of application: **05.11.2014**
(21) Application number: 13177475.4
(22) Date of filing: 22.07.2013
(51) Int. Cl.: B29C 73/16, B29L 30/00

(54) **Quick connection and separation device of tire repair machine**

(30) Priority: 03.05.2013 TW 102208261 U
(71) Applicant: Active Tools International (HK) Ltd., Causeway Bay Hong Kong (CN)
(72) Inventor: Hong, David, Causeway Bay (CN)
(74) Representative: Walker, Ross Thomson

(57) **Abstract**

A quick connection and separation device of a tire repair machine comprises an air compressor (1), a glue bucket (2), and a pipe joint (4) configured for connecting with an air pipe; an intake pipe (21) of the glue bucket or a connecting portion of the pipe joint can be connected to an exit pipe (11) of the air compressor; and when the intake pipe or the connecting portion is connected to the exit pipe of the air compressor, the intake pipe or the connecting portion is embedded in a fixing/unfixing structure inside a body (10) of the air compressor to be fixed; and when the intake pipe or the connecting portion should be separated from the air compressor, the intake pipe or connecting portion can be unfixed by pressing the fixing/unfixing structure, and quick connection or separation effect can be achieved.

## Description

This application claims the priority of a Taiwanese utility model application No. 102208261 filed on May 3, 2013, the entire content of which is hereby incorporated by reference.

### FIELD OF THE INVENTION

The present invention relates to a repair machine that can inject compressed air or glue configured for repairing a tire into the tire, and more particularly, relates to a quick connection or separation structure disposed between a glue bucket or a pipe joint and an air compressor.

### BACKGROUND OF THE INVENTION

When a tire of a vehicle is broken, the vehicle cannot run due to loss of tire pressure. Until the broken tire is replaced, or repaired and aerated, the vehicle can run again. Therefore, vehicles are generally equipped with spare tires for contingencies. However, the weight of a spare tire and a rim thereof will increase the total weight of a vehicle and consume more fuel, which is wasteful and not environmentally friendly. In order to decrease the weight of a spare tire attached on a vehicle, some manufacturers produce relatively lighter tire repair machines equipped in vehicles. Once a tire is broken and leaks, such a tire repair machine can be taken out for emergency repair and inflation.

A well-known tire repair machine can also be used as a tire inflator. The tire repair machine generally includes a case, a glue bucket, and an air compressor, and both the glue bucket and the air compressor are received inside the case. The glue bucket is assembled with a glue pipe, and the air compressor is assembled to an air pipe. One end of the glue pipe is provided with a glue nozzle, and one end of the air pipe is provided with an air nozzle. When the tire repair machine is used as a tire inflator, a user can connect the air nozzle to an air tap of a tire directly, and then turns on the air compressor to inject compressed air into the tire. When the tire repair machine performs repairing function, the glue nozzle needs to be mounted on an air tap of a tire, and then a pump is turned on to inject compressed air into the glue bucket. Glue is pushed out of the glue bucket by the compressed air, and is injected into the tire. Afterwards, compressed air is injected into the tire to generate a proper tire pressure. The air nozzle is removed, and a vehicle using the tire is driven to run a distance slowly, so that the glue flow uniformly on an inner wall surface of the tire and is filled in broken portions. After the glue is solidified, air leakage of the tire can be avoided, and the vehicle can be driven to reach the nearest repair station for further inspection.

Though the above-described tire repair machine generally shows instructions for use on the case thereof, a person who is not familiar with operation of the machine may be often unable to determine either the air pipe or glue pipe should be used at first. Besides, a person who is familiar with operation may even misuse, so that the glue-injected function may be performed while the tire only needs to be inflated. Thus, glue is injected into the tire and the air tap, and the air tap, the glue pipe, and the glue nozzle must be all replaced.

To solve above-described problems, in some tire repair machines, the glue bucket, the air pipe, and the air compressor are separated from each other. When a tire should be inflated, a user can connect the air pipe to the air compressor directly and then inflate the tire. When the tire should be repaired, the glue bucket is connected with the air compressor, and compressed air is injected into the glue bucket to push the glue out and inject the glue into the tire. However, in the aforementioned methods, the glue bucket or the air pipe is connected to the air compressor by screw combination. Thus, when the glue bucket or the air pipe is connected to and separated from the air compressor, both the connection and separation operations should be completed by rotating many times. Furthermore, if rotating force is insufficient, the compressed air or the glue will leak; and if rotating force is overmuch, the separation operation may be difficult.

### SUMMARY OF THE INVENTION

The objective of the present invention is to solve this problem: when the glue bucket or the air pipe of a well-known tire repair machine is connected to or separated from the air compressor, the operation costs much time and is difficult.

The present invention is characterized that: a tire repair machine includes an air compressor, a glue bucket, and a pipe joint configured for connecting with an air pipe; an intake pipe of the glue bucket or a connecting portion of the pipe joint can be connected to an exit pipe of the air compressor; and when the intake pipe or the connecting portion is connected to the exit pipe of the air compressor, the intake pipe or the connecting portion is embedded in a fixing/unfixing structure inside a body of the air compressor to be fixed; and when the intake pipe or the connecting portion should be separated from the air compressor, the intake pipe or connecting portion can be unfixed by pressing the fixing/unfixing structure, and quick connection or separation effect can be achieved.

A technical solution of the present invention is that: a body of an air compressor is provided with an exit pipe and a fixing/unfixing structure, and the fixing/unfixing structure forms fixing or unfixing by pressing; a glue bucket is provided with an intake pipe and a glue outlet; and the fixing/unfixing structure is capable of fixing the intake pipe when the intake pipe is completely assembled with the exit pipe of the air compressor, and is further capable of unfixing the intake pipe when the fixing/unfixing structure is pressed.

Another technical solution of the present invention is that: the tire repair machine further includes a pipe joint configured to connect with the air pipe; the pipe joint has a connecting portion; and the connecting portion is capable of being fixed by the fixing/unfixing structure when the connecting portion is completely assembled with the exit pipe of the air compressor, and the fixing/unfixing structure is capable of unfixing the connecting portion when the fixing/unfixing structure is pressed.

A technical solution of the fixing/unfixing structure of the present invention is that: the fixing/unfixing structure includes a pressing element, a fixing spring, and at least one returning spring; the pressing element includes at least one protruding portion, and the protruding portion includes at least one bevel; the pressing element is capable of moving axially when being pressed, so that the bevel drives the fixing spring to move radially, and the pressing element compresses the returning spring; when the pressure applied to the pressing element is removed, the returning spring pushes the pressing element to an original position, and the fixing spring returns to an original status because of stretch force thereof.

In order to cooperate with the fixing/unfixing structure, the glue bucket of the present invention, configured to contain glue, has an intake pipe and a glue outlet; an outer surface of the intake pipe of the glue bucket defines a ring recess that can allow the fixing spring to be embedded therein; and the fixing spring is embedded in the ring recess when the intake pipe is completely assembled with the exit pipe. An outer surface of the connecting portion defines a ring recess configured for enabling the fixing spring to be embedded in. So when the intake pipe of the glue bucket or the connecting portion of the pipe joint is assembled with the exit pipe of the air compressor, the fixing spring is embedded in the ring recess to form fixing; and when the pressing element is pressed, the fixing spring is released from hold of the ring recess, and the intake pipe or the connecting portion can be separated from the exit pipe.

Based on consideration of simplifying a structure of the quick connection and separation device of the present invention, in the present invention: a bottom surface of the pressing element forms a plurality of convex columns and a cylindrical protruding portion; each of the convex columns is assembled with one of the returning springs, two ends of each of the returning springs are applied to the bottom surface of the pressing element and the body of the air compressor respectively; and a cylindrical side wall of the protruding portion defines two symmetrical notches, and two sides corresponding to each of the two notches form the bevel. Besides, the pressing element defines a through-hole, and the exit pipe passes through the through-hole when the pressing element is mounted on the body of the air compressor.

Based on effectively fixing the glue bucket or the pipe joint using the fixing spring, in the present invention: the fixing spring is formed by a spring wire and includes a ring, extends from two sides of the ring along a same tangent direction respectively, and has a fixing portion configured to be embedded in ring recess. Advantageously, the fixing portion is arc-shaped, and an inner diameter formed by two arcs is equal to a bottom diameter of the ring recess.

### BRIEF DESCRIPTION OF THE DRAWINGS

The present invention will be further described with reference to the accompanying drawings and embodiments in the following, in the accompanying drawings:
Fig. 1 is a perspective disassembled view of an embodiment of a combination relationship between an air compressor and a glue bucket or an air pipe of the present invention;
Fig. 2 is a perspective view of an embodiment of the present invention, wherein a glue bucket is combined with an air compressor;
Fig. 3 is a perspective view of an embodiment of the present invention, wherein an air pipe and a pipe joint are assembled together and are combined with an air compressor;
Fig. 4 is a cut-away view of an embodiment of the present invention, and shows structures comprising an air compressor and a glue bucket;
Fig. 5 is a cut-away view of a structure of the present invention, and shows a glue bucket assembled with and fixed on an air compressor;
Fig. 6 is another cut-away view of the structure of the present invention shown in Fig.5, and shows the glue bucket assembled with and fixed on the air compressor from another view angle;
Fig. 7 is a cut-away view of a structure of the present invention, and shows that a pressing element is pressed to unfix a glue bucket;
Fig. 8 is a cut-away view of a structure of the present invention, and shows that an air pipe and a pipe joint are assemble together and are combined with and fixed on an air compressor;
Fig. 9A, Fig. 9B, and Fig. 9C are respectively two perspective views and a plane view of a structure of a pressing element of the present invention;
Fig. 10A and Fig. 10B are respectively a perspective view and a plane view of a structure of a fixing spring of the present invention.

### BRIEF DESCRIPTION OF THE SYMBOLS

1-air compressor; 10-body; 101-fixing hole; 11-exit pipe; 111-air outlet; 112-anti-leakage ring; 12-pressing element; 120-through-hole; 121-convex column; 122-returning spring; 123-hook buckle; 124-protruding portion; 1241-bevel; 13-fixing spring; 131-ring; 132-fixing portion ; 14-locating column; 2-glue bucket; 21-intake pipe; 211-ring recess; 22-glue outlet; 23-glue nozzle; 3-air pipe; 31-air inlet end; 32-air outlet end; 4-pipe joint; 41-connecting portion; 411-ring recess.

### DETAILED DESCRIPTION OF THE PREFERRED EMBODIMENT

To make the technical feature, objective and effect of the present invention be understood more clearly, now the specific implementation of the present invention is described in detail with reference to the accompanying drawings and embodiments.

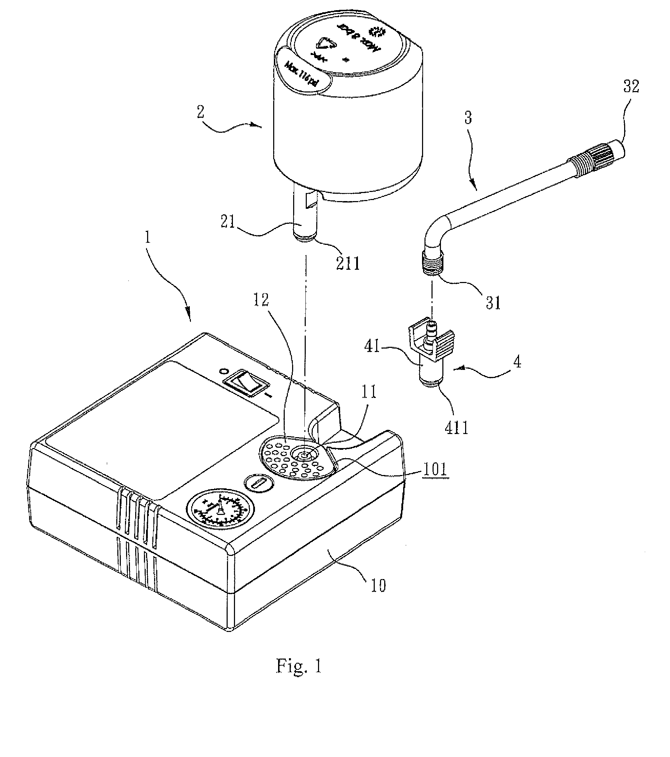

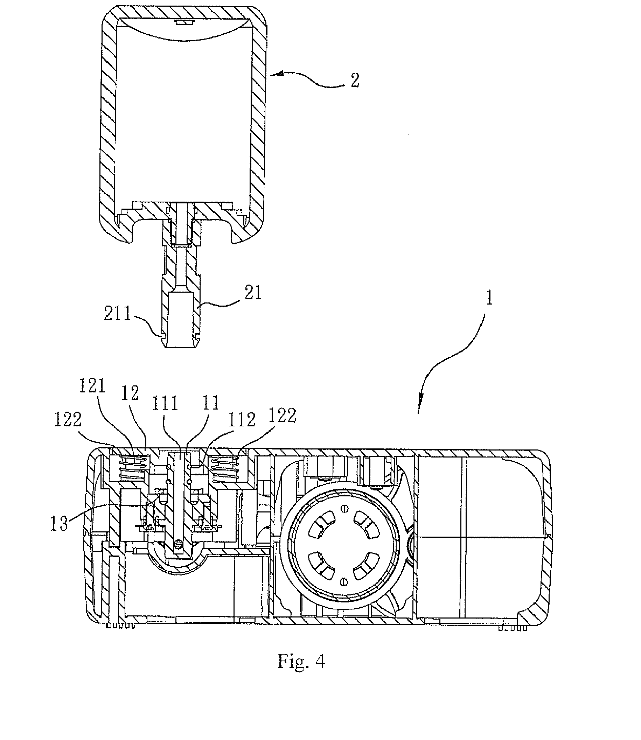

As shown in Fig. 1, the present invention provides an embodiment of a tire repair machine that comprises an air compressor 1, a glue bucket 2, an air pipe 3, and a pipe joint 4. As shown in Fig. 4, wherein, the air compressor 1 is a device configured to generate compressed air, and includes a body 10, an exit pipe 11, and a fixing/unfixing structure. The fixing/unfixing structure includes a pressing element 12, a fixing spring 13, and at least one returning spring 122, and these elements are all configured to fix the glue bucket 2 or the pipe joint 4 on the air compressor 1. The principle and the structure for generating the compressed air by the air compressor 1 are well-known technologies, and are not the focus of demands of the present invention, so they will not be detailed.

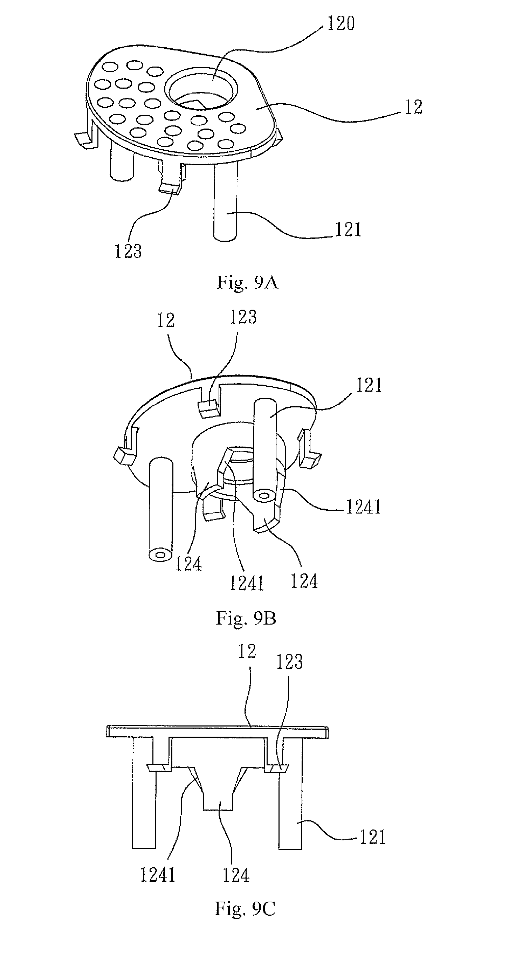

As shown in Fig. 9A, Fig. 9B, and Fig. 9C, the pressing element 12 has a plate, and the plate defines a through-hole 120 communicating upper and down sides of the plate. A periphery of a bottom surface of the plate defines a plurality of hook buckles 123 extending down axially, and the bottom surface of the plate further defines a plurality of convex columns 121 extending down axially. A portion of the bottom surface of the plate corresponding to the through-hole 120 extending axially to form a cylindrical protruding portion 124, that is, the through-hole 120 is directly used as a cylindrical center hole of the protruding portion 124. Advantageously, a cylindrical side wall of the protruding portion 124 defines two symmetrical notches, and portions of the cylindrical side wall corresponding to two sides of each of the two notches form a bevel 1241. The pressing element 12 is movably mounted on the body 10 via a fixing hole 101 defined in the body 10 of the air compressor 1, and each of the hook buckles 123 is fastened under a periphery of the fixing hole 101 to prevent the pressing element 12 from going up and being released from the fixing hole 101, and enable the pressing element 12 to move down axially.

In a preferred embodiment, the returning springs 122 are compressed springs. Each of the returning springs 122 is correspondingly mounted on one of the convex columns 121 of the pressing element 12, that is, each of the convex columns 121 is inserted into a corresponding one of the returning springs 122, and the pressing element 12 and the returning springs 122 are all mounted inside the fixing hole 101. Two ends of each of the returning springs 122 resist the bottom surface of the pressing element 12 and a portion of the body 10 in the fixing hole 101 respectively. Thus, when the pressing element 12 is pressed and moves down axially, the returning springs 122 are compressed and store stretch force; and when the pressing element 12 is released from compression, the returning springs 122 will drive the pressing element 12 to bounce and return to an original position. In this embodiment of the present invention, when the upper surface of the pressing element 12 is flush with the outer surface of the body 10 of the air compressor 1, the pressing element 12 achieves the best status of returning to the original position.

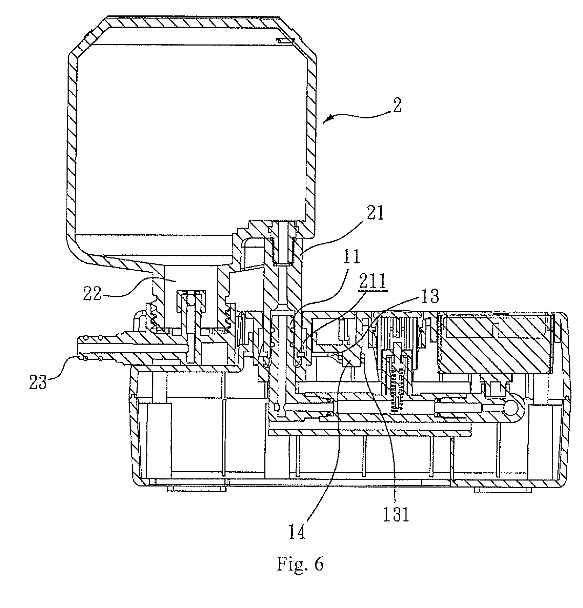

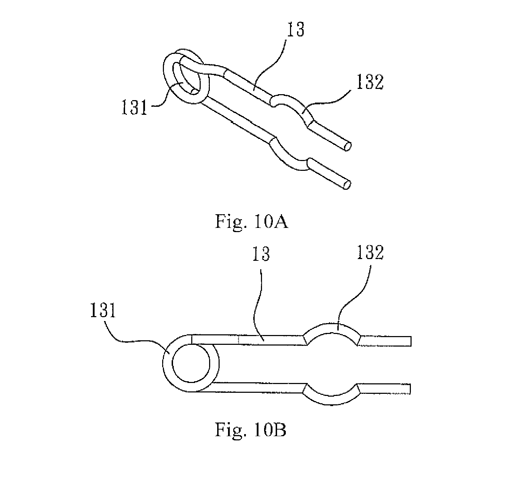

As shown in Fig. 10A and Fig. 10B, in a preferred embodiment of the fixing spring 13 of the present invention is formed by a spring wire. The spring wire is shaped to have at least one ring 131. Two ends of the spring wire respectively extend from two sides of the ring 131 along a same tangent direction, and each end of the spring wire further forms an arc-shaped fixing portion 132 in a proper position. In this embodiment of the present invention, the two arcs of the two fixing portions 132 cooperatively form a circle. A method for assembling the fixing spring 13 with the body 10 of the air compressor 1 is that: the body 10 forms a locating column 14, the ring 131 of the fixing spring 13 is coiled on the locating column 14, the fixing spring 13 is positioned to extend approximately horizontally, and the two fixing portions 132 are located below the through-hole 120 of the pressing element 12 (as shown in Fig. 6).

As shown in Fig. 4 and Fig. 6, the glue bucket 2 of the present invention is a container configured to contain the glue for repairing tires, and has an intake pipe 21 located at a side thereof and a glue outlet 22 located at a center thereof. Wherein, the intake pipe 21 extends out from the glue bucket 2, and an outer surface of the intake pipe 21 defines a ring recess 211 configured for enabling the above-described fixing spring 13 to be embedded therein. Advantageously, a bottom diameter of the ring recess 211 is equal to an inner diameter formed by the two arcs of the two fixing portion 132.

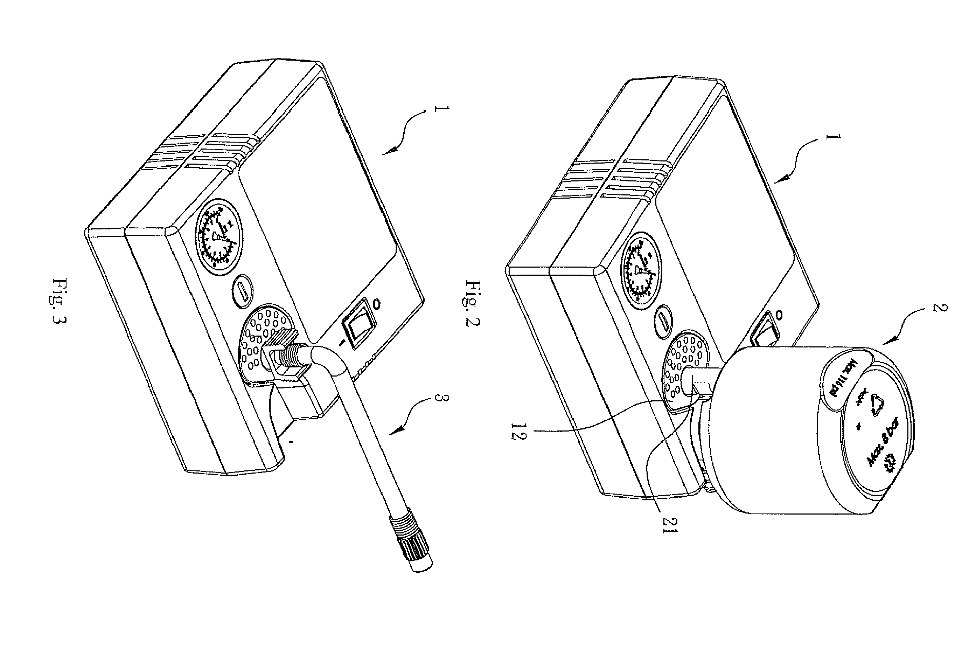

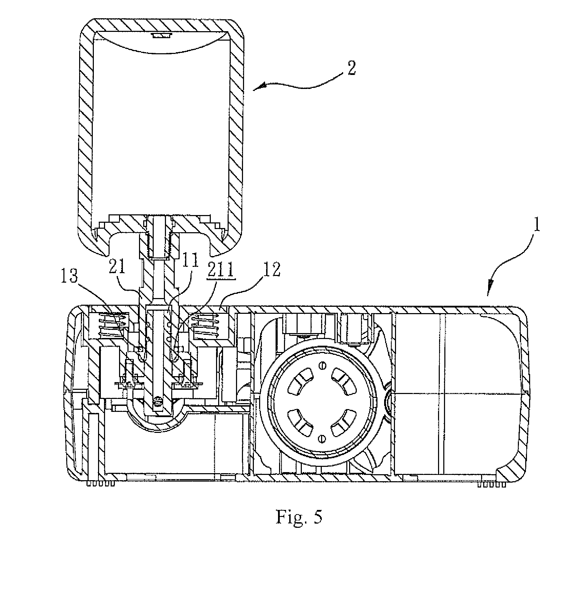

As shown in Fig. 4 and Fig. 5, when the tire needs to be repaired by injecting glue into the tire, the glue bucket 2 should be inverted, and the intake pipe 21 should be connected to the exit pipe 11 of the air compressor 1. Particularly, when an end of the intake pipe 11 with a chamfer contacts the two fixing portion 132 of the fixing spring 13, the two fixing portion 132 are gradually pushed away from each other. Until the ring recess 211 moves to a position corresponding to the two fixing portions 132, the stretch force of the fixing spring 13 drives the two fixing portion 132 to bound and be embedded in the ring recess 211. Thus, the intake pipe 11 is held and fixed (as shown in Fig. 2 and Fig. 5), and the glue bucket 2 is fixed on the air compressor 1. At this time, the air compressor 1 works, compressed air can be injected into the glue bucket 2 via the intake pipe 11, and the compressed air filled in the glue bucket 2 pushes glue out via the glue outlet 22 and the glue nozzle 23 formed on the glue outlet 22. The glue nozzle 23 is generally connected with a glue pipe (not shown), and the glue pipe is connected to the air tap of the tire to inject the glue into the tire.

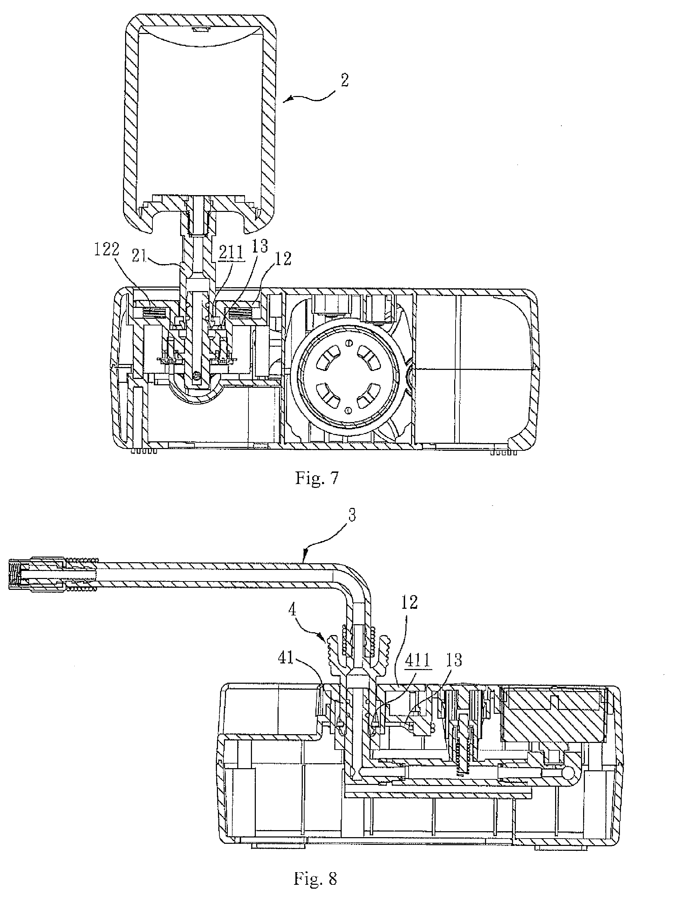

As shown in Fig. 7, when the injection of the glue is completed and the glue bucket 2 should be separated from the air compressor 1, a user only needs to exert an appropriate force on the pressing element 12. Each of the bevels 1241 is driven to push the two sides of the fixing spring 13, and the two fixing portion 132 are pushed out of the ring recess 211. Thus, the intake pipe 21 can be pulled out of the exit pipe 11 easily, and the glue bucket 2 is separated from the air compressor 1.

As shown in Fig. 1, a pipe joint 4 provided by the present invention is an interface element configured to connect the air compressor 1 with the air pipe 3. One end of the pipe joint 4 is provided with a connecting portion 41 which can be connected with the exit pipe 11 of the air compressor 1, and the other end of the pipe joint 4 can be connected with the air pipe 3. An outer surface of the connecting portion 41 defines a ring recess 411 configured for enabling the fixing spring 13 to be embedded in.

When a tire only needs to be inflated, the connecting portion 41 of the pipe joint 4 is connected to the exit pipe 11 of the air compressor 1. When an end of the connecting portion 41 with a chamfer contacts the two fixing portion 132 of the fixing spring 13, the two fixing portion 132 are gradually pushed away from each other. Until the ring recess 411 moves to a position corresponding to the two fixing portions 132, the stretch force of the fixing spring 13 drives the fixing portion 132 to bound and be embedded in the ring recess 411. Thus, the connecting portion 31 is held and fixed (as shown in Fig. 3 and Fig. 8), and the pipe joint 4 is fixed on the air compressor 1. An air inlet end of the air pipe 3 is connected to the other end of the pipe joint 4, and an air outlet end 32 of the air pipe 3 is connected to an air tap of the tire. At this time, the air compressor 1 works, and compressed air can be injected into the tire via the pipe joint 4 and the air pipe 3.

Similarly, when inflation is completed and the pipe joint 4 should be separated from the air compressor 1, a user only needs to exert an appropriate force on the pressing element 12. Each of the bevels 1241 of the pressing element 12 is driven to push the two sides of the fixing spring 13, and the two fixing portion 132 are pushed out of the ring recess 411. Thus, the pipe joint 4 can be pulled out from the exit pipe 11 easily, and the pipe joint 4 is separated from the air compressor 1.

While the embodiments of the present invention are described with reference to the accompanying drawings above, the present invention is not limited to the above-mentioned specific implementations. In fact, the above-mentioned specific implementations are intended to be exemplary not to be limiting. In the inspiration of the present invention, those ordinary skills in the art can also make many modifications without breaking away from the subject of the present invention and the protection scope of the claims. All these modifications belong to the protection of the present invention.

## Claims

1. A quick connection and separation device of a tire repair machine, wherein, the quick connection and separation device of the tire repair machine comprises:
an air compressor, the air compressor includes a body provided with an exit pipe and a fixing/unfixing structure, and the fixing/unfixing structure forms fixing or unfixing by pressing; and
a glue bucket provided with an intake pipe and a glue outlet; the fixing/unfixing structure is capable of fixing the intake pipe when the intake pipe is completely assembled with the exit pipe of the air compressor, and is capable of unfixing the intake pipe when the fixing/unfixing structure is pressed.

2. The quick connection and separation device of the tire repair machine according to claim 1, wherein, the fixing/unfixing structure includes a pressing element, a fixing spring, and at least one returning spring; the pressing element includes at least one protruding portion, and the protruding portion includes at least one bevel; the pressing element is capable of moving axially when being pressed, so that the bevel drives the fixing spring to move radially, and the pressing element compresses the returning spring; when the pressure applied to the pressing element is removed, the returning spring pushes the pressing element to an original position; an outer surface of the intake pipe of the glue bucket defines a ring recess that allows the fixing spring to be embedded therein; and the fixing spring is embedded in the ring recess when the intake pipe is completely assembled with the exit pipe.

3. The quick connection and separation device of the tire repair machine according to claim 1, wherein, the quick connection and separation device of the tire repair machine further comprises a pipe joint; one end of the pipe joint is provided with a connecting portion that is capable of being combined with the exit pipe of the air compressor, and the other end of the pipe joint is capable of being combined with an air pipe; and the connecting portion is capable of being fixed by the fixing/unfixing structure when the connecting portion is completely assembled with the exit pipe of the air compressor, and the fixing/unfixing structure is capable of unfixing the connecting portion when the fixing/unfixing structure is pressed.

4. The quick connection and separation device of the tire repair machine according to claim 3, wherein, an outer surface of the connecting portion defines a ring recess configured for enabling the fixing spring to be embedded in.

5. The quick connection and separation device of the tire repair machine according to claim 2 or claim 4, wherein, a bottom surface of the pressing element forms a plurality of convex columns and a cylindrical protruding portion; each of the convex columns is assembled with one of the returning springs, two ends of each of the returning springs are applied to the bottom surface of the pressing element and the body of the air compressor respectively; and a cylindrical side wall of the protruding portion defines two symmetrical notches, and two sides corresponding to each of the two notches form the bevel.

6. The quick connection and separation device of the tire repair machine according to claim 5, wherein, the pressing element defines a through-hole, and the exit pipe passes through the through-hole when the pressing element is mounted on the body of the air compressor.

7. The quick connection and separation device of the tire repair machine according to claim 5, wherein, the fixing spring is formed by a spring wire and includes a ring, extends from two sides of the ring along a same tangent direction respectively, and has a fixing portion configured to be embedded in ring recess.

8. The quick connection and separation device of the tire repair machine according to claim 7, wherein, the fixing portion is arc-shaped, and an inner diameter formed by two arcs is equal to a bottom diameter of the ring recess.
